(19) Europäisches Patentamt
European Patent Office
Office européen des brevets

(11) EP 2 121 850 B1

(12) EUROPEAN PATENT SPECIFICATION

(45) Date of publication and mention of the grant of the patent:
**01.09.2010 Bulletin 2010/35**

(21) Application number: **08707915.8**

(22) Date of filing: **16.01.2008**

(51) Int Cl.:
*C09B 67/48* (2006.01) *G03G 9/09* (2006.01)

(86) International application number:
**PCT/EP2008/050420**

(87) International publication number:
**WO 2008/090058 (31.07.2008 Gazette 2008/31)**

(54) **NEW CRYSTAL PHASE OF A BENZIMIDAZOLONE AZO PIGMENT**

NEUE KRISTALLPHASE EINES BENZIMIDAZOLON-AZO-PIGMENTS

NOUVELLE PHASE CRISTALLINE D'UN PIGMENT AZO BENZIMIDAZOLONE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.01.2007 EP 07101187**

(43) Date of publication of application:
**25.11.2009 Bulletin 2009/48**

(73) Proprietor: **BASF SE**
**67056 Ludwigshafen (DE)**

(72) Inventors:
- **MCHUGH, Callum**
  **Houston Renfrewshire PA6 7AY (GB)**
- **FRASER, Iain Frank**
  **Kilbirnie Ayrshire KA25 7JS (GB)**
- **WONG, Kim**
  **Paisley Scotland PA2 9DS (GB)**
- **ELDER, Robert**
  **Linwood Renfrewshire PA3 3SW (GB)**

(56) References cited:
**US-A- 3 137 686**

- **DATABASE WPI Week 200369 Derwent Publications Ltd., London, GB; AN 2003-724984 XP002444212 -& JP 2003 128948 A (DAINIPPON INK & CHEM INC) 8 May 2003 (2003-05-08) cited in the application**
- **DATABASE WPI Week 200429 Derwent Publications Ltd., London, GB; AN 2004-309259 XP002444214 -& JP 2004 083907 A (DAINIPPON INK & CHEM INC) 18 March 2004 (2004-03-18) cited in the application**
- **DATABASE WPI Week 199704 Derwent Publications Ltd., London, GB; AN 1997-038107 XP002444213 -& JP 08 295815 A (DAINICHISEIKA COLOR & CHEM MFG) 12 November 1996 (1996-11-12) cited in the application**
- **DATABASE WPI Week 200436 Derwent Publications Ltd., London, GB; AN 2004-382503 XP002444215 & JP 2004 137487 A (DAINIPPON INK & CHEM INC) 13 May 2004 (2004-05-13) cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 121 850 B1

## Description

The invention belongs to a new γ crystal phase of the polymorphic pigment of the formula

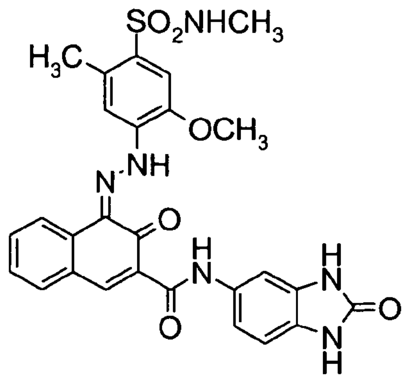

(Colour Index Pigment Red 185).

US 3,137,686 describes a process for the preparation of a large number of water insoluble benzimidazolone azo pigments including C.I. Pigment Red 185. Pyridine can be used as a solvent for recrystallisation. However, nothing is disclosed about crystallography or polymorphism.

JP-A-1996/295815 discloses the conditioning at high temperature of mono azo benzimidazolone pigments, including C.I. Pigment Red 185, using water soluble aromatic derivatives, such as β-naphthol. There is nothing about crystallography or polymorphism either. The experimental reproduction of examples 4 and 5 leads only to the known α and β polymorphs (see comparative examples

JP-A-2003/128948 discloses a further process for the preparation of C.I. Pigment Red 185 in the β form, wherein the diazonium salt and coupler solutions are simultaneously added to a reactor while the pH is buffered to 5. The X-ray diffraction data of two crystal polymorphs (α and β) are reported. The β form may alternatively be obtained by heating the α form in dimethylformamide, then if desired further recrystallisation in isobutyl alcohol.

JP-A-2004/083907 further discloses an improvement of the aspect ratio of β-form C. I. Pigment Red 185 by adding a surfactant and from 0.1 to 2% of a pH buffer followed by solvent conditioning. Water, methanol and dimethylformamide are disclosed as suitable conditioning solvents, though only water at 140°C is used in the examples.

JP-A-2004/137 487 discloses a further process for conditioning C. I. Pigment Red 185 at pH > 12 after standard synthesis in the presence of surfactants but avoiding the use of solvents, which also leads to the β crystal form.

WO 2005/065298 discloses a process for the aqueous conditioning of yellow monoazo acetylacetamino benzimidazolone pigments in the presence of ethoxylate alkyl phenols and strong alkali.

Commercial pigments such as Epsilon Red LB-1T028™ (Sumika Color Co Ltd), Graphtol® Carmine HF4C, Hostaprint® Carmine HF4C or Novoperm® Carmine HF4C (Clariant GmbH), Microlith® Red 4C-K (Ciba Specialty Chemicals Inc.) or Pigment Red 185 (CPMA) all show the β crystal phase.

Monoazo benzimidazolone colourants such as C. I. Pigment Red 185 are water insoluble pigments having excellent fastness to solvents, to migration and to light. They are suitable for a range of applications, for example the colouration of printing inks, plastics and coatings. Nevertheless, the gloss, transparency, rheology and hue are not entirely satisfactory.

Surprisingly, we have found a new crystal modification of C.I. Pigment Red 185 which is obtained by synthesis in the presence of a non-ionic or amphoteric surfactant, followed by aqueous treatment at pH ≥ 7, preferably while heating, in the presence of a base and an inert liquid having a low solubility in water, preferably in a quantity sufficient to form a separate organic phase. Inert liquids are such which do not react with the pigment at the aqueous treatment's temperature. Suitably, the inert liquids are liquid at 20°C, or their melting point is higher than 20°C but lower than the temperature of the aqueous treatment.

The new γ crystal modification is chemically identical to C.I. Pigment Red 185 as shown by FT-IR spectroscopy, but it is crystallographically clearly different from the known α and crystal modifications as is apparent from their respective powder X-ray diffraction patterns (cu$K_\alpha$ = 1.5405, only the strongest or most characteristic reflections are shown):

| polymorph / degrees 2θ | | |
|---|---|---|
| α | β | γ (new) |
| 6.0 | | |
| 8.9◊ | 8.6▲ | 8.5▲ |
| 12.0 | 12.9 ◊ | 11.3◊ |
| 13.5 | | |
| 14.0 | 14.0◊ | |
| | 14.8◊ | 14.7 |
| 16.7◊ | 17.2◊ | 17.2 |
| 26.4▲ | 26.9▲ | 26.0 |
| | | 28.4 |
| ▲ strongest reflections / ◊ weak, just for the purpose of comparison | | |

Figure 1 shows the X-ray diffraction pattern of the known α crystal modification.
Figure 2 shows the X-ray diffraction pattern of the known β crystal modification.
Figure 3 shows the X-ray diffraction pattern of the instant γ crystal modification.

The instant γ crystal modification has further, less characteristic and very weak reflections at 11.3, 18.6, 20.3, 22.8, 25.3 and 26.8 degrees 2θ.

Accordingly, the invention also relates to a process for the preparation of the pigment of the formula

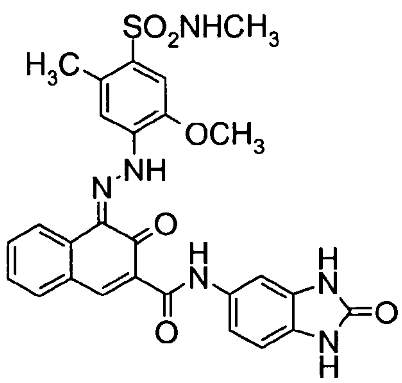
,

comprising coupling a solution of diazotised 4-methylaminosulfonyl-p-cresidine with 5-(2'-hydroxy-3'-naphthoylamino)-benzimidazolone in the presence of a non-ionic or amphoteric surfactant, followed by aqueous treatment at pH ≥ 7, preferably while heating, in the presence of a base and an inert liquid having a low solubility in water, preferably in a quantity sufficient to form a separate organic phase.

The heat treatment is preferably achieved at a temperature of from 30 to 180˚C for from 10 minutes to 100 hours, most preferred from 30 to 500 minutes.

The diazotised solution is preferably aqueous.

The non-ionic surfactants are for example fatty alcohols, fatty alcohol ethoxylates (fatty alcohol alkylene oxide adducts), such as polyoxyethylene lauryl ether, fatty amine ethoxylates, such as coco amine ethoxylates, oleyl amine ethoxylates, tallow amine ethoxylates, phosphoric esters of aliphatic and aromatic alcohols, fatty acid polyglycol esters, such as castor oil ethoxylates or polyoxyethylene sorbitan monolaurate, fatty acid amide ethoxylates, for example diethanolamine oleic acid amide, aryl or alkylaryl ethoxylates, such as phenol ethoxylates or nonyl phenol ethoxylates, alkyl glucosides, amine oxides, block copolymers, or mixtures thereof. Preferred non-ionic surfactants are fatty alcohol ethoxylates.

Amphoteric surfactants are for example betaines, such as fatty acid amide N-propyl betaines, especially cocamidopropyl betaine.

The base is generally an amine or a metal hydroxide, preferably an alkali metal hydroxide, such as KOH or especially NaOH. The pH of the aqueous phase is suitably ≥ 7, preferably > 7, most preferably > 9 during at least part of the pigment's after-treatment.

The inert liquids are generally such which are usually used as solvents in organic chemistry. They can be aliphatic or aromatic, such as for example $R_1OH$, $HOR_2OH$, $R_3COOR_4$, $HNR_1R_2$, $NR_1R_2R_3$, $R_5NH_2$, aromatic N-heterocycles, $R_3OOCR_6COOR_4$, $R_3COOR_6COOR_4$ or $R_3COOR_6OOCR_4$, wherein $R_1$ is $C_4$-$C_{24}$alkyl or $C_7$-$C_{24}$aralkyl each unsubstituted or substituted by halogen, $R_2$ is $C_4$-$C_{24}$alkylen, $R_3$ and $R_4$ are independently from one another $C_1$-$C_{24}$alkyl or $C_7$-$C_{24}$aralkyl each unsubstituted or substituted by halogen, or phenyl or naphthyl each unsubstituted or substituted by halogen, $CF_3$, $NO_2$, $C_1$-$C_8$alkyl and/or $C_1$-$C_8$alkoxy, or $R_3$ and $R_4$ are together $C_2$-$C_8$alkylen, $R_5$ is $C_4$-$C_{24}$alkyl or $C_7$-$C_{24}$aralkyl each unsubstituted or substituted by halogen, and $R_6$ is $C_1$-$C_8$alkylen.

Examples of suitable inert liquids are alcohols having 4-20 carbon atoms such as n-butanol, sec-butanol, isobutanol, n-pentanol, 2-pentanol, neopentanol, 2-methyl-1-butanol, n-hexanol, cyclohexanol, 2-methyl-2-pentanol, 3-methyl-3-pentanol, 2-methyl-2-hexanol, 3-ethyl-3-pentanol, n-octanol, 2,4,4-trimethyl-2-pentanol, dodecyl alcohol or tridecyl alcohol; ethers, such as di-tert-butylester or tetrahydropyran; ketones, such as diethyl ketone, cyclohexanone; esters, such as butyl formate, ethyl acetate, ethyl benzoate, butyl acetate, propyl propionate, dibutyl phthalate or other carboxylic acid $C_1$-$C_6$alkyl or $C_2$-$C_6$glycol esters, especially phthalic or benzoic acid esters; alkyldiol ether esters, such as 2-ethoxy-ethyl acetate, 1-methoxy-2-propyl acetate or other glycol ether acetates; nitriles, such as benzonitrile; aliphatic or aromatic, optionally substituted hydrocarbons, such as cyclohexane, toluene, xylenes, ethylbenzene, anisole, chlorobenzene, o-dichlorobenzene, nitrobenzene, 1,2,4-trichlorobenzene or bromobenzene; amines such as di-n-butylamine or n-dodecylamine; and aromatic heterocycles, such as picolines or quinoline.

When a base is used as the inert liquid, it is not necessary to add a different base provided the amount of basic inert liquid is sufficient to reach pH ≥ 7.

The inert liquid is preferably slightly polar, such as an alcohol, amine, ether, ketone, acid or ester. Thus, especially preferred solvents are alcohols, ethers and esters, particularly benzoic acid $C_1$-$C_6$alkyl esters or most preferred benzyl benzoate.

The respective quantities of water and inert liquid are not essential, but preferably a two-phase system is formed at 20°C. Depending of their solubility in water, inert liquids may usually be used in an amount of from 0.05 to 90% by weight, based on the total quantity of inert liquid and water. Within this range, as a general trend, preferably inert liquids which are better soluble in water should be used in a larger amount than inert liquids which are less soluble in water. Preferred inert liquids are such having a solubility of ≤ 20 g in 100 g of water at the conditioning temperature. More preferred inert liquids have a solubility in water at 20°C of from 0 to 5% by weight, most preferred from 0 to 1% by weight, based on the amount of water.

The new γ crystal modification of C.I. Pigment Red 185 is technically superior to the previously known α and β crystal modifications. For example in a solvent based packaging ink, it shows significantly higher gloss and transparency, improved rheology and an appreciably bluer shade at similar colour strength and dispersion in comparison with the known β crystal modification. The new γ crystal modification is also superior to the known α crystal modification, which is coloristically unstable and converts to the β crystal modification in the presence of solvents.

The pigment obtained according to the invention can be used for all customary purposes, for example for mass-coloration of polymers, including polymers in the form of fibres, surface-coatings (including special-effect paints, including those for the automobile sector) and printing inks, or also in so-called resists or as toners. Such applications are evident to the person skilled in the art and they are also disclosed in reference works, for example "Industrial Organic Pigments" (W. Herbst + K. Hunger, VCH Weinheim / New York, new editions being continually published in German and English).

The pigments according to the invention can be isolated in pure form and dried, following which treatment they are readily dispersible in plastics, surface coatings and printing inks, for example by means of a ball mill or a bead mill. They can also be used in the form of moist filter cakes directly for the preparation of pigment dispersions. Conventional additives in conventional concentrations may optionally be added to the pigments according to the invention before or during the precipitation or isolation in order to improve the application-related properties.

As well as for the mass-pigmenting of high molecular weight organic materials in the form of plastics, surface coatings and printing inks, they are also suitable, for example, for the production of solid toners, wax transfer ribbons or colour filters.

The high molecular weight organic material to be coloured according to the invention may be of natural or synthetic origin and usually has a molecular weight in the range from $10^3$ to $10^8$ g/mol. It may be, for example, a natural resin or drying oil, rubber or casein, or a modified natural material such as chlorinated rubber, an oil-modified alkyd resin, viscose, a cellulose ether or ester, such as cellulose acetate, cellulose propionate, cellulose acetobutyrate or nitrocellulose, but especially a totally synthetic organic polymer (both thermosetting plastics and thermoplastics), as can be obtained by polymerisation, polycondensation or polyaddition, for example a polyolefin, such as polyethylene, polypropylene or polyisobutylene, a substituted polyolefin, such as a polymerisation product of vinyl chloride, vinyl acetate,

styrene, acrylonitrile, an acrylic acid and/or methacrylic acid ester or butadiene, as well as a copolymer of the mentioned monomers, especially ABS or EVA.

From the series of the polyaddition resins and polycondensation resins there may be mentioned the condensation products of formaldehyde with phenols, so-called phenoplasts, and the condensation products of formaldehyde with urea, thiourea and melamine, so-called aminoplasts, the polyesters used as surface-coating resins, either saturated, such as alkyd resins, or unsaturated, such as maleic resins, and also linear polyesters and polyamides or silicones.

The mentioned high molecular weight compounds may be in the form of single compounds or mixtures, in the form of plastic masses or melts, which may optionally be spun to form fibres.

They may also be in the form of their monomers or in the polymerised state in dissolved form as film formers or binders for surface coatings or printing inks, such as boiled linseed oil, nitrocellulose, alkyd resins, melamine resins, urea-formaldehyde resins or acrylic resins.

Pigmentation of the high molecular weight organic substances with the pigments according to the invention is carried out, for example, by admixing such a pigment, optionally in the form of a masterbatch, with the substrates using rolling mills, mixing or grinding apparatus. The pigmented material is then generally brought into the desired final form by methods known *per se*, such as calendering, compression moulding, extrusion, coating, casting or by injection moulding. In order to produce non-rigid mouldings or to reduce their brittleness, it is often desirable to incorporate so-called plasticisers into the high molecular weight compounds prior to shaping. There may be used as plasticisers, for example, esters of phosphoric acid, phthalic acid or sebacic acid. In the process according to the invention, the plasticisers may be incorporated before or after the incorporation of the pigment dye into the polymers. It is also possible, in order to achieve different hues, to add to the high molecular weight organic materials, in addition to the pigment compositions, also fillers or other colour-providing constituents, such as white, coloured or black pigments as well as effect pigments, in each case in the desired amount.

For the pigmenting of surface coatings and printing inks, the high molecular weight organic materials and the pigments according to the invention are finely dispersed or dissolved, optionally together with additives such as fillers, other pigments, siccatives or plasticisers, generally in an organic and/or aqueous solvent or solvent mixture. It is also possible to use a procedure in which the individual components are dispersed or dissolved separately or in which a plurality are dispersed or dissolved together and only then all of the components combined.

Accordingly, a further embodiment relates also to mass-coloured high molecular weight organic material, comprising

(a) from 0.05 to 70 % by weight, based on the sum of (a) and (b), of a pigment according to the invention, and

(b) from 99.95 to 30 % by weight, based on the sum of (a) and (b), of a high molecular weight organic material.

The material in question may be either a ready-for-use composition or an article formed therefrom, or a masterbatch, for example in the form of granules. The high molecular weight organic material coloured according to the invention may also comprise conventional additives, for example stabilisers.

Accordingly, a further embodiment relates also to a method of mass-colouring high molecular weight organic material, wherein a pigment according to the invention is incorporated into the material, for example by mixing and processing the high molecular weight organic material together with the pigment according to the invention, optionally in the form of a masterbatch, in a manner known *per se.*

Particularly advantageous is the use of the instant pigment in inks, especially gravure or packaging inks, and in electrophotographic toners.

Hence, the invention also relates to an ink comprising from 5 to 30% by weight, based on the total weight of the ink, of the pigment of the invention. The inks of the invention generally also comprise a resin and a solvent, and optionally customary additives.

Preferably, the pigment is dispersed in the ink at a concentration level of from 6 to 25% by weight, based on the total weight of the dispersion. In a particular aspect of the invention, the pigment is first dispersed at a concentration level of from 12 to 25% by weight, based on the total weight of the dispersion, then further to a level of from 6 to 9% by weight, based on the total weight of the dispersion.

The kind of resin is not particularly restricted. Typical examples of suitable resins are rosin; rosin salts of mono- or divalent metals; chemically modified rosins such as phenol-modified, hydrogenated, dehydrogenated or disproportionated rosins; dimerised or polymerised rosins; esterified rosins or partially esterified rosins; modified maleic rosin; mono- or divalent metal salts of chemically modified rosins; hydrocarbon and modified hydrocarbon resins; alkyd resins; polyamide resins; cellulose resins or mixtures of any two or more thereof.

The principal component of rosin is abietic acid (minor components being isomers and/or homologues therof, such as neoabietic acid, levopimaric acid, pimaric acid, isopimaric acid and /or palustric acid). Rosin salts of mono- or divalent metals are for example sodium, potassium, calcium, zinc or magnesium rosinates. Phenol-modified rosins (also

called rosin-modified phenol resins or synthetic copals though rosin generally predominates in quantity and character) are well-known in the art. Esterified rosin is a rosin, the carboxy groups of which are esterified with a polyalcohol having for example from 2 to 12, preferably from 3 to 6 hydroxy groups, such as glycerol or pentaerythritol. The modified hydrocarbon resin may optionally be a hybrid hydrocarbon resin.

Preferred resins are rosin, phenol-modified rosins, metal salts of rosin, metal salts of chemically modified rosins and mixtures thereof. A preferred cellulose resin is nitrocellulose.

The solvents are well-known in the art and depend on the resin to be used. Most common solvents for inks are hydrocarbons, alcohols and/or esters.

The electrophotographic toner of the present invention consists of particles comprising a binder and from 0.1 to 50% by weight, based on the weight of the electrophotographic toner particles, of the instant pigment. Preferably, the content of pigment is from 0.5 to 20% by weight, more preferably from 1 to 15% by weight, and most preferred from 2 to 12% by weight, based on the weight of the electrophotographic toner particles.

Binders suitable for the instant electrophotographic toners are well-known in the art. Most frequently, binders are used as mixtures of from 2 to 10 components selected from polymers and copolymers. It is preferred to select binders in order the toner particles to have a fusing temperature of from 100 to 150˚C, preferably from 120 to 150˚C. The fusing temperature may be determined by using a melting point apparatus as the temperature at which the polymeric particles begin to coalesce.

The coloured polymeric electrophotographic toner particles of the present invention preferably comprise a charge control agent. Mixtures of charge control agents are also suitable. The charge control agent may be either colourless or coloured.

The present coloured polymeric electrophotographic toner particles may optionally additionally comprise further ingredients or a mixture of further ingredients. Generally, such further ingredients are selected from the group consisting of waxes and UV absorbers. For example, from 0.1 to 5% by weight of waxes (preferably of softening point from 50˚C to 180˚C), based on the weight of the polymeric electrophotographic toner particles, prevent the toner particles from sticking to the roll.

The optional UV absorbers are incorporated for example to protect the colourant in the coloured polymeric electrophotographic toner particles from UV degradation by blocking ultraviolet radiation from reaching the colourant.

Preferably, the average particle diameter of the coloured polymeric electrophotographic toner particles of the present invention is less than about 100 μm. Usually the average particle diameter tends to be smaller, for instance less than 80 μm or 70 μm, often less than 50 μm or 40 μm and typically the average particle diameter will be from 0.1 to 20 μm. Most preferably the average particle diameter is from 0.8 to 9.9 μm and most preferred from 3 to 7 μm. The average particle diameter may be determined by a Coulter particle size analyser according to procedures well documented in the literature.

Electrophotographic toners may be prepared by any known method. Generally, however, it is preferred to use emulsion polymerisation or copolymerisation. In such methods, the binder is prepared in the presence of the pigment and the polymerisation or coplymerisation conditions are selected in order the desired binder or binder mixture to be formed. Just for example, one of the many suitable methods is that disclosed in WO-07/054 467, which reference herein enclosed by reference also discloses some adequate binders, charge control agents, waxes and UV absorbers, to which compounds the instant toners are however not restricted.

The examples which follow illustrate the invention, without limiting it ("%" are by weight where not otherwise specified):

Example 1: 4-Methylaminosulfonyl-p-cresidine (50.25 g) is dissolved in a solution of HCl (37.2 g) in water (516 ml). The solution is cooled to 0 ˚C by addition of ice and to this is added a solution of $NaNO_2$ (15.86 g) in water (75 ml). After 30 minutes stirring below 5˚C, activated charcoal (1.0 g) and amorphous silica (1.0 g) are added and the resulting mixture is filtered. The resulting clarified diazonium salt solution is kept below 5˚C and immediately prior to coupling excess nitrous acid is removed from the diazonium salt solution with sulphamic acid.

In a separate vessel, 5-(2'-hydroxy-3'-naphthoylamino)-benzimidazolone (82.02 g) is dissolved in a solution of NaOH (40.25 g) in water (1840 ml). To this is added a solution of polyoxyethylene lauryl ether (23 oxyethylene groups) (3.04 g non-ionic surfactant) dissolved in water (50 ml).

In a third vessel, glacial acetic acid (2.37 g) and sodium acetate trihydrate (74.70 g) are dissolved in water (1800 ml). To this is added a solution of non-ionic surfactant (12.15 g) dissolved in water (100 ml). The diazonium salt and 5-(2'-hydroxy-3'-naphthoylamino)-benzimidazolone solutions are then run simultaneously into the third vessel with rapid agitation over 1 hour at pH 6 and 20˚C.

The resulting pigment slurry is adjusted to pH 7 using dilute sodium hydroxide solution. An emulsion of benzyl benzoate (30.00 g), non-ionic surfactant (3.00 g) and water (100 ml) are added, followed by an emulsion of dibutyl sebacate (6.00 g), non-ionic surfactant (0.69 g) and water (50 ml). The resulting mixture is heated to 95˚C for 2 hours. NaOH (134.40 g, 50% in water) is added to the slurry which is heated for a further 2 hours at 95˚C, filtered,

washed and dried for 18 hours at 60°C/5·$10^3$ Pa. The product shows the typical X-ray powder diffraction of the γ crystal modification as described above and shown in Figure 3.

In addition or instead of polyoxyethylene lauryl ether, it is also adequate to use other non-ionic surfactants, for example polyoxyethylene sorbitan monolaurate (for example with 10-20 oxyethylene groups), diethanolamine oleic acid amide or mixtures thereof. Instead of a non-ionic surfactant, one can alternatively also use an amphoteric surfactant, such as cocamidopropyl betaine.

Example 2: The product according to example 1 is calendered into PVC at a concentration of 1% by weight, leading to excellent results with respect to colour strength, hue, chroma, dispersibility and light-fastness.

Example 3: The product according to example 1 is injection-moulded into HD-PE at a concentration of 0.1% by weight, leading to excellent results with respect to colour strength, hue, chroma, dispersibility, light-fastness and low warping.

Example 4: Comparison of commercial β C. I. Pigment Red 185 (Novoperm® Carmine HF4C, Clariant) and the new γ crystal modification of same formula in nitrocellulose (NC) based inks.

A millbase (20% pigmentation, pigment: binder 3:1, alcohol : ester 3:1) is prepared from 20.0 g of pigment, 6.7 g of DLX 3/5 NC Resin™ (Nobel Enterprises), 55.0 g of ethanol and 18.3 g of ethyl acetate. These materials are added into a 250 ml polyethylene container along with 200 g of 2.5 mm glass beads. The pigment is hand mixed in to wet out. The container is placed onto a Skandex® dispenser and shaken for 45 minutes. The contents are then sieved and collected.

An ink (10% pigmentation, pigment: binder 1:1, alcohol : ester 3:1) is then prepared by mixing together 25.0 g of above millbase, 3.3 g of DLX 3/5 NC Resin™ (Nobel Enterprises), 15.9 g of ethanol and 5.8 g of ethyl acetate. The thus prepared ink is maintained at 25°C in a water bath for 30 minutes before measurement of flow.

Colouristics: Side by side colouristic evaluations of standard versus sample are prepared from the final inks at equal pigmentation.

Rheology: The ink Millbase rheology is measured using a Carrimed Controlled Stress Rheometer.

| Criteria | | Novoperm® Carmine HF4C (β crystal phase) | Example 1 (γ crystal phase) |
|---|---|---|---|
| Colouristics at Equal Pigmentation: | | | |
| Colour Strength | [%] | 100 | 95 |
| Shade | | standard | moderately bluer |
| Gloss | | standard | considerably superior gloss |
| Transparency | | standard | considerably more transparent |
| Millbase rheology: | | | |
| Viscosity @ 10 $s^{-1}$ | [Pa.s] | 0.2473 | 0.1646 |
| Viscosity @ 500 $s^{-1}$ | [Pa.s] | 0.0726 | 0.055 |
| Shortness index * | | 3.4 | 3.0 |

$$* \text{ Shortness index} = \frac{\text{viscosity @ } 10\ s^{-1}}{\text{viscosity @ } 500\ s^{-1}}$$

Comparative example 1: It is proceeded analogously to example 1, with the differences that, after coupling, the pigment slurry is filtered and washed free of salt, then the resulting presscake is reslurried in dimethylformamide (500 ml) and heated to 110°C for 1 hour, filtered and washed with methanol and water until the filtrate is colourless, and dried for 18 hours at 60°C/5·$10^3$ Pa. The product obtained shows the typical X-ray powder diffraction of the β crystal modification as described above and shown in Figure 3 (known from US 3,137,686, JP-A-2003/128948 and JP-A-2004/083907).

Comparative example 2: It is proceeded analogously to example 1, with the differences that, after coupling,

NaOH (268.80 g, 50% in water) is added and the resulting mixture is heated at 95˚C for 4 hours, then the pigment slurry is filtered, washed free of salt and dried for 18 hours at 60˚C/5·$10^3$ Pa. The product obtained shows the typical X-ray powder diffraction of the β crystal modification as described above and shown in Figure 3 (known from JP-A-2004/ 137487).

Comparative example 3: It is proceeded precisely according to example 4 of JP-A-1996/295815. The product obtained just after completed reaction is the α crystal polymorph, which turns into a mixture of the α and β crystal polymorph after aging in the presence of β-naphthol.

Comparative examples 4-5: It is proceeded precisely according to comparative examples 5 and 6 of JP-A-1996/295815. In both cases, the product obtained is the α crystal polymorph.

Comparative example 6: It is proceeded precisely according to the first part of example 4 of JP-A-1996/295 815. The product obtained just after completed reaction is then treated in analogy to instant example 1, thus leading to the β crystal polymorph. This shows that the presence of a non-ionic or amphoteric surfactant is necessary to obtain the new γ crystal modification.

## Claims

1. A pigment of the formula

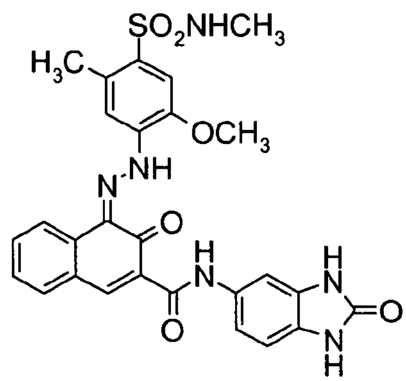

,

**characterized** through a powder X-ray diffraction pattern showing a strong reflection at 8.5 degrees 2θ and weak reflections at 14.7, 17.2, 26.0 and 28.4 degrees 2θ.

2. A pigment according to claim 1, having further very weak reflections at 11.3, 18.6, 20.3, 22.8, 25.3 and 26.8 degrees 2θ.

3. A process for the preparation of the pigment of the formula

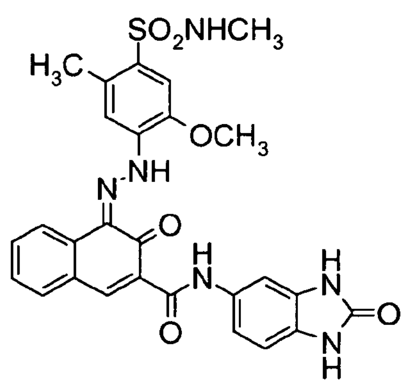

,

comprising coupling a solution of diazotised 4-methylaminosulfonyl-p-cresidine with 5-(2'-hydroxy-3'-naphthoylamino)-benzimidazolone in the presence of a non-ionic or amphoteric surfactant, followed by aqueous treatment at pH ≥ 7, preferably while heating, in the presence of a base and an inert liquid having a low solubility in water, preferably

in a quantity sufficient to form a separate organic phase.

**4.** A process of claim 3, wherein the surfactant is non-ionic and / or the inert liquid is an alcohol, amine, ether, ketone, acid or ester having a solubility in water at 20°C of from 0 to 5% by weight, most preferred from 0 to 1% by weight, based on the amount of water.

**5.** A mass-coloured high molecular weight organic material, comprising

(a) from 0.05 to 70 % by weight, based on the sum of (a) and (b), of a pigment according to claim 1 or 2, or obtained according to claim 3 or 4, and
(b) from 99.95 to 30 % by weight, based on the sum of (a) and (b), of a high molecular weight organic material.

**6.** A method of mass-colouring high molecular weight organic material, wherein a pigment according to claim 1 or 2, or obtained according to claim 3 or 4, is incorporated into the material.

**7.** An ink comprising from 5 to 30% by weight, based on the total weight of the ink, of the pigment according to claim 1 or 2, or obtained according to claim 3 or 4.

**8.** An ink according to claim 7, which is a gravure or packaging ink.

**9.** An electrophotographic toner consisting of particles comprising a binder and from 0.1 to 50% by weight, based on the weight of the electrophotographic toner particles, of the pigment according to claim 1 or 2.

**10.** The use of a pigment according to claim 1 or 2, or obtained according to claim 3 or 4, for the colouration of a high molecular weight organic material.

**11.** The use according to claim 10, wherein the high molecular weight organic material is an ink, a coating composition, a plastic material or an electrophotographic toner.

**Patentansprüche**

**1.** Pigment der Formel

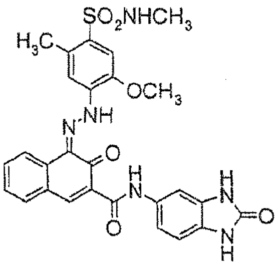
,

**gekennzeichnet durch** ein Pulverröntgenbeugungsmuster mit einem starken Reflex bei 8,5 Grad 2θ und schwachen Reflexen bei 14,7, 17,2, 26,0 und 28,4 Grad 2θ.

**2.** Pigment nach Anspruch 1 mit weiteren sehr schwachen Reflexen bei 11,3, 18,6, 20,3, 22,8, 25,3 und 26,8 Grad 2θ.

**3.** Verfahren zur Herstellung des Pigments der Formel

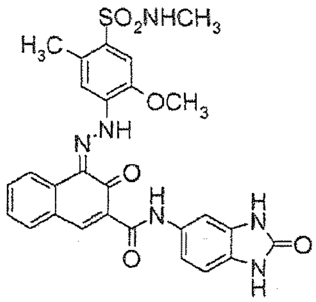

,

,

bei dem man eine Lösung von diazotiertem 4-Methylaminosulfonyl-p-kresidin in Gegenwart eines nichtionischen oder amphoteren Tensids mit 5-(2'-Hydroxy-3'-naphthoylamino)benzimidazolon kuppelt und danach eine wäßrige Behandlung bei pH ≥ 7, vorzugsweise unter Erhitzen, in Gegenwart einer Base und einer inerten Flüssigkeit mit geringer Wasserlöslichkeit, vorzugsweise in einer zur Bildung einer separaten organischen Phase ausreichenden Menge, durchführt.

**4.** Verfahren nach Anspruch 3, bei dem das Tensid nichtionisch ist und/oder es sich bei der inerten Flüssigkeit um einen Alkohol, ein Amin, einen Ether, ein Keton, eine Säure oder einen Ester mit einer Wasserlöslichkeit bei 20˚C von 0 bis 5 Gew.-%, ganz besonders bevorzugt von 0 bis 1 Gew.-%, bezogen auf die Wassermenge, handelt.

**5.** In der Masse gefärbtes hochmolekulares organisches Material, enthaltend

(a) 0,05 bis 70 Gew.-%, bezogen auf die Summe von (a) und (b), eines Pigments nach Anspruch 1 oder 2 oder eines nach Anspruch 3 oder 4 erhaltenen Pigments und
(b) 99,95 bis 30 Gew.-%, bezogen auf die Summe von (a) und (b), eines hochmolekularen organischen Materials.

**6.** Verfahren zum Färben von hochmolekularem organischem Material in der Masse, bei dem man ein Pigment nach Anspruch 1 oder 2 oder ein nach Anspruch 3 oder 4 erhaltenes Pigment in das Material einarbeitet.

**7.** Tinte oder Druckfarbe, enthaltend 5 bis 30 Gew.-%, bezogen auf das Gesamtgewicht der Tinte oder Druckfarbe, des Pigments nach Anspruch 1 oder 2 oder des nach Anspruch 3 oder 4 erhaltenen Pigments.

**8.** Tinte oder Druckfarbe nach Anspruch 7, bei der es sich um eine Tiefdruckfarbe oder Verpackungsdruckfarbe handelt.

**9.** Elektrophotographischer Toner aus Teilchen, die ein Bindemittel und 0,1 bis 50 Gew.-%, bezogen auf das Gewicht der Teilchen von elektrophotographischem Toner, des Pigments nach Anspruch 1 oder 2 enthalten.

**10.** Verwendung eines Pigments nach Anspruch 1 oder 2 oder eines nach Anspruch 3 oder 4 erhaltenen Pigments zum Färben eines hochmolekularen organischen Materials.

**11.** Verwendung nach Anspruch 10, wobei es sich bei dem hochmolekularen organischen Material um eine Tinte, eine Druckfarbe, eine Beschichtungszusammensetzung, einen Kunststoff oder einen elektrophotographischen Toner handelt.

## Revendications

**1.** Pigment de la formule

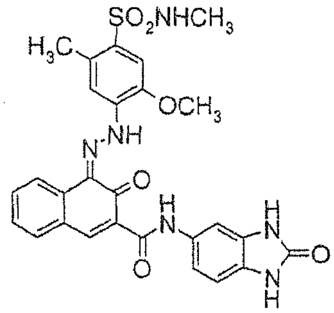

,

caractérisé par un spectre de diffraction aux rayons X sur poudre qui présente une forte réflexion à un angle 2θ de 8,5 degrés et de faibles réflexions à des angles 2θ de 14,7, de 17,2, de 26,0 et de 28,4 degrés.

**2.** Pigment selon la revendication 1, présentant en outre de très faibles réflexions à des angles 2θ de 11,3, de 18,6, de 20,3, de 22,8, de 25,3 et de 26,8 degrés.

**3.** Procédé pour la préparation du pigment de la formule

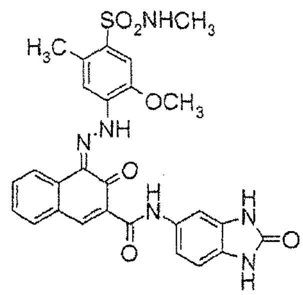

,

comprenant le couplage d'une solution de 4-méthylaminosulfonyl-p-crésidine diazotée avec de la 5-(2'-hydroxy-3'-naphtoylamino)-benzimidazolone en présence d'un agent tensioactif non ionique ou amphotère, suivi d'un traitement aqueux à un pH ≥ 7, de préférence en chauffant, en présence d'une base et d'un liquide inerte ayant une faible solubilité dans l'eau, de préférence en une quantité suffisante pour former une phase organique séparée.

**4.** Procédé selon la revendication 3, dans lequel l'agent tensioactif est non ionique et/ou le liquide inerte est un alcool, une amine, un éther, une cétone, un acide ou un ester dont la solubilité dans l'eau à 20 °C varie de 0 à 5 % en poids, le plus préférablement de 0 à 1 % en poids, basé sur la quantité d'eau.

**5.** Matériau organique à masse moléculaire élevée coloré dans la masse, comprenant

(a) de 0,05 à 70 % en poids, basé sur la somme de (a) et (b), d'un pigment selon la revendication 1 ou 2, ou obtenu selon la revendication 3 ou 4, et
(b) de 99,95 à 30 % en poids, basé sur la somme de (a) et (b), d'un matériau organique à masse moléculaire élevée.

**6.** Procédé de coloration dans la masse d'un matériau organique à masse moléculaire élevée, dans lequel un pigment selon la revendication 1 ou 2, ou obtenu selon la revendication 3 ou 4, est incorporé dans le matériau.

**7.** Encre comprenant de 5 à 30 % en poids, basé sur le poids total de l'encre, du pigment selon la revendication 1 ou 2, ou obtenu selon la revendication 3 ou 4.

**8.** Encre selon la revendication 7, laquelle est une encre à gravure ou à emballage.

**9.** Toner électrophotographique constitué de particules comprenant un liant et de 0,1 à 50 % en poids, basé sur le poids des particules du toner électrophotographique, du pigment selon la revendication 1 ou 2.

**10.** Utilisation d'un pigment selon la revendication 1 ou 2, ou obtenu selon la revendication 3 ou 4, pour la coloration d'un matériau organique à masse moléculaire élevée.

**11.** Utilisation selon la revendication 10, dans laquelle le matériau organique à masse moléculaire élevée est une encre, une composition de revêtement, un matériau plastique ou un toner électrophotographique.

Fig. 1

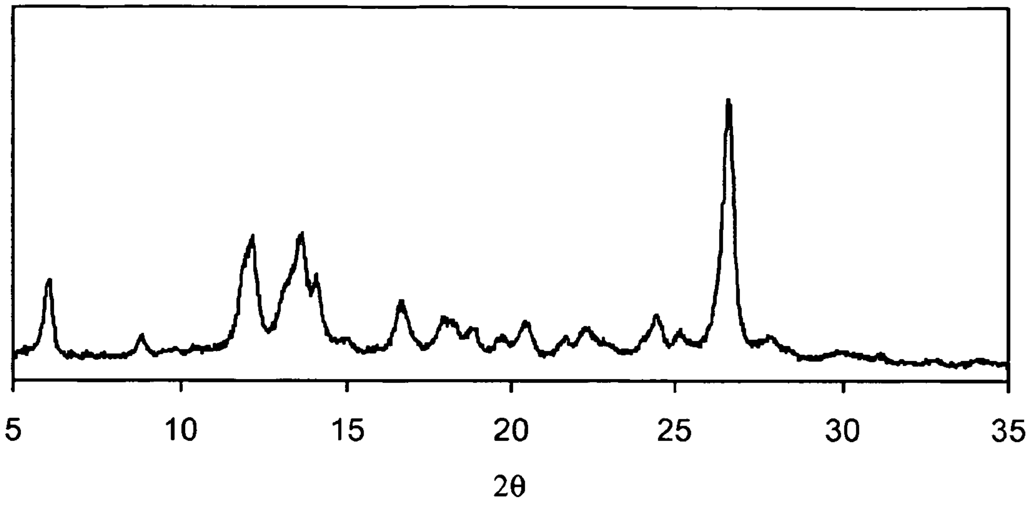


Fig. 2

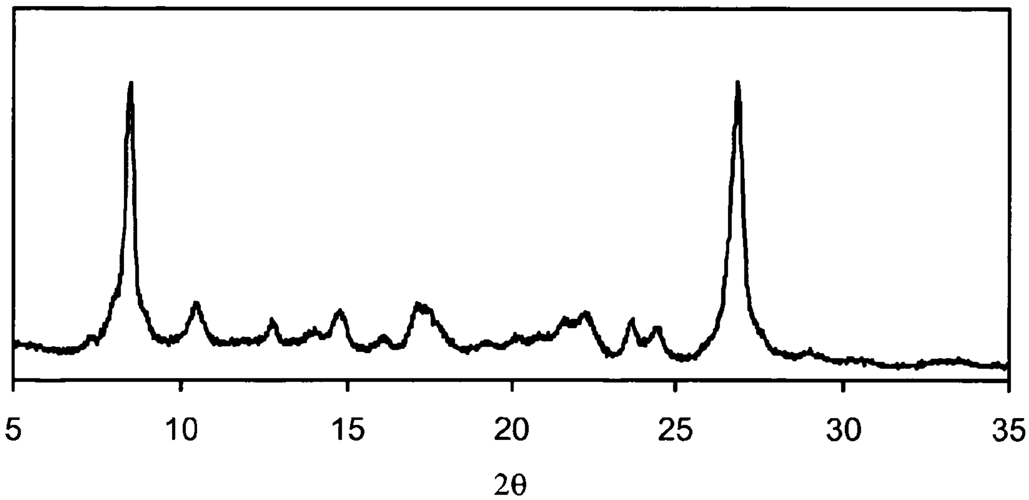


Fig. 3

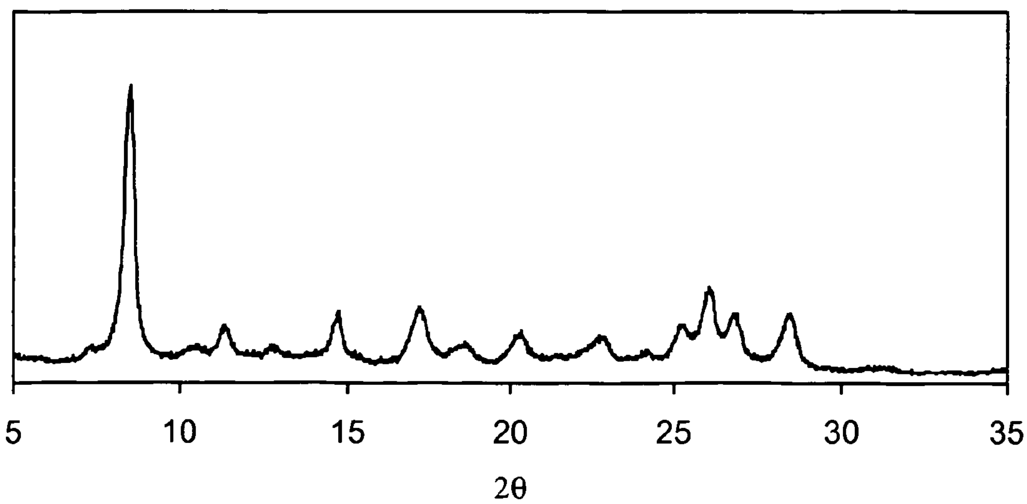

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3137686 A
- JP 8295815 A
- JP 2003128948 A
- JP 2004083907 A
- JP 2004137487 A
- WO 2005065298 A
- WO 07054467 A


### Non-patent literature cited in the description


- **W. Herbst ; K. Hunger.** Industrial Organic Pigments. VCH